# DEMANDE DE BREVET EUROPEEN

(11) **EP 2 273 705 A1**
(43) Date de publication de la demande: **12.01.2011**
(21) Numéro de dépôt: 09164691.9
(22) Date de dépôt: 06.07.2009
(51) Int. Cl.: H04B 17/00

(54) **Procédé de test de fonctionnement d'un circuit émetteur-récepteur de signaux**

(71) Demandeur: EM Microelectronic-Marin SA, 2074 Marin (CH)
(72) Inventeur: Descombes, Arthur, 3210 Kerzers (CH); Pittorino, Tindaro, 2074 Marin-Epagnier (CH)
(74) Mandataire: Surmely, Gérard

(57) **Abrégé**

L'invention concerne un procédé de test d'un circuit émetteur-récepteur. Ce circuit émetteur-récepteur comprend une antenne reliée à une unité de traitement agencée pour recevoir des signaux et les convertir en fréquence. Le circuit émetteur-récepteur comprend également un amplificateur de puissance relié à ladite antenne et agencé pour envoyé des signaux d'émission. Le circuit émetteur-récepteur comprend en outre un module de test, **caractérisé en ce qu**'il comprend les étapes consistant à:
a) connecter électriquement le module de test à l'unité de traitement du circuit émetteur-récepteur;
b) tester le fonctionnement du circuit émetteur-récepteur dans un premier mode de fonctionnement qui peut être soit un mode d'émission de données soit un mode de réception de données, à l'aide du module de test;
c) tester le fonctionnement du circuit émetteur-récepteur dans un second mode de fonctionnement qui peut être soit un mode de réception de données soit un mode d'émission de données, à l'aide du module de test; et
d) déconnecter électriquement le module de test de l'unité de traitement.

## Description

La présente invention concerne de manière générale un procédé de test d'un circuit émetteur-récepteur. Ce circuit émetteur-récepteur comprend une antenne reliée à une unité de traitement agencée pour recevoir des signaux et les convertir en fréquence. Le circuit émetteur-récepteur comprend également un amplificateur de puissance relié à ladite antenne et agencé pour envoyé des signaux d'émission. Le circuit émetteur-récepteur comprend en outre un module de test.

### ARRIERE PLAN TECHNOLOGIQUE

Il est connu dans l'art antérieur des procédures de test de circuit émetteur-récepteur. Ces procédures de test ont pour but de vérifier, après certaines étapes du processus de fabrication et à la fin du processus de fabrication, que le circuit, toujours implanté sur sa tranche de silicium ou wafer, fonctionne correctement et que les caractéristiques revendiquées sont bien présentes. Pour cela, les circuits sont ainsi sortis des chaînes de production pour être placés dans le ou les appareils de test. Des électrodes sont alors disposées de sorte à être en contact avec les bornes de connexion du circuit. Puis, divers signaux électriques sont appliqués dans ledit circuit via ces électrodes pour mettre en fonctionnement le circuit émetteur-récepteur et ainsi tester les caractéristiques du circuit.

Or, un inconvénient de ces procédures est qu'elles sont coûteuses. Effectivement, cet inconvénient d'une part vient du fait que les appareils de test de circuit sur wafer existant sont utilisés pour vérifier que les circuits fonctionnent mais également que les caractéristiques intrinsèques du circuit émetteur-récepteur sont conformes à la théorie. Pour cela, il est donc nécessaire d'avoir des appareils polyvalents capables de tester toutes les caractéristiques. Cette polyvalence nécessite de ces appareils une technologie de pointe. Ainsi, cette complexité et cette polyvalence se répercutent sur le prix de vente.

D'autre part, la procédure en elle-même est coûteuse. En effet, cette procédure et les appareils utilisés impliquent que les circuits sont testés de façon complète, c'est-à-dire que toutes les caractéristiques du circuit sont testées afin de voir si le circuit correspond aux spécifications attendues. De ce fait, avec cette procédure, il n'est pas possible de vérifier simplement que les fonctionnalités du circuit fonctionnent correctement. Ce test des fonctionnalités passe forcément par un test complet du circuit. Or, il est intéressant de tester les fonctionnalités à différentes étapes de la fabrication afin de détecter au plus tôt les circuits défectueux.

Ainsi, si à chaque test des fonctionnalités du circuit, il est nécessaire de tester entièrement les caractéristiques du circuit, cela engendre une perte de temps non négligeable et ainsi une perte financière.

### RESUME DE L'INVENTION

L'invention concerne un procédé de test de fonctionnement d'un circuit émetteur-récepteur qui pallie les inconvénients susmentionnés de l'art antérieur à savoir réaliser un procédé de test de fonctionnement d'un circuit émetteur-récepteur permettant de savoir si le circuit émetteur-récepteur fonctionne ou pas et qui soit peu coûteux et plus simple.

A cet effet, l'invention concerne le procédé de test de fonctionnement d'un circuit émetteur-récepteur cité ci-devant qui se **caractérise en ce qu**'il comprend les étapes consistant à :
a) connecter électriquement le module de test à l'unité de traitement du circuit émetteur-récepteur;
b) tester le fonctionnement du circuit émetteur-récepteur dans un premier mode de fonctionnement qui peut être soit un mode d'émission de données soit un mode de réception de données, à l'aide du module de test;
c) tester le fonctionnement du circuit émetteur-récepteur dans un second mode de fonctionnement inverse du premier mode de fonctionnement qui peut être soit un mode de réception de données soit un mode d'émission de données, à l'aide du module de test; et
d) déconnecter électriquement le module de test de l'unité de traitement.

Des étapes particulières avantageuses du procédé de test son définies dans les revendications dépendantes 2 à 9.

Un avantage du procédé selon la présente invention est qu'il permet de se passer d'un outillage complexe et spécifique. En effet, le procédé selon la présente invention utilise un module de test implémenté directement au niveau du circuit émetteur-récepteur lors de la réalisation de ce dernier, c'est-à-dire sur le même substrat en silicium.

Or, c'est ce module de test qui va vérifier que le circuit fonctionne ou non. Il n'est donc pas besoin de se munir d'un appareil externe pour tester le bon fonctionnement du circuit émetteur-récepteur.

Avantageusement, cette absence d'appareil de test externe permet la diminution des coûts engendrés par un tel procédé. En effet, en se passant d'appareil externe et en faisant un test préalable, le procédé selon la présente invention permet de ne pas investir dans un appareil coûteux. De plus il permet de facilement repérer les circuits défectueux avant qu'ils ne soient complètement terminés et donc de réduire les coûts.

De plus, ce procédé a en outre l'avantage d'être simple et direct car le résultat de ce test est de savoir si les fonctionnalités du circuit émetteur-récepteur fonctionnent ou non et pas de savoir si les caractéristiques théoriques sont présentes en pratiques. Il n'est alors nul besoin d'interpréter les caractéristiques intrinsèques du circuit pour savoir si celui-ci est défectueux ou non.

L'invention concerne également un module de test pour un circuit émetteur-récepteur dont la particularité est d'être intégré dans le circuit émetteur-récepteur présenté ci-dessus.

Des modes de réalisation avantageux du module de test font l'objet des revendications dépendantes 11 à 12.

Un avantage de ce module de test implémenté directement sur le même substrat que le circuit émetteur-récepteur est que ce module de test peut être séparé dudit circuit émetteur-récepteur. En effet, l'agencement de ce module de test est tel qu'il n'est relié au circuit émetteur-récepteur que via deux pistes conductrices. Ainsi, après le test du circuit émetteur-récepteur, le circuit de test peut être séparé électriquement ou mécaniquement par découpage afin de séparer le module de test du reste du circuit émetteur-récepteur. Cela permet ainsi de gagner de la surface et d'éviter que le module de test ne perturbe le fonctionnement du circuit émetteur-récepteur.

### BREVE DESCRIPTION DES FIGURES

Les buts, avantages et caractéristiques du procédé de test de fonctionnement d'un circuit émetteur-récepteur et du module de test associé apparaitront plus clairement dans la description détaillée suivante d'au moins une forme de réalisation de l'invention donnée uniquement à titre d'exemple non limitative et illustrée par les dessins annexés sur lesquels :
- la figure 1 représente de manière schématique le circuit émetteur-récepteur pour la mise en oeuvre du procédé de test selon la présente invention ;
- la figure 2 représente de manière schématique le module de test du circuit émetteur-récepteur selon la présente invention ; et
- la figure 3 représente de manière schématique l'unité de traitement du circuit émetteur-récepteur selon la présente invention.

### DESCRIPTION DETAILLEE

Dans la description suivante, toutes les parties du circuit émetteur-récepteur qui sont bien connues d'un homme du métier dans ce domaine technique ne seront expliquées que de manière simplifiée.

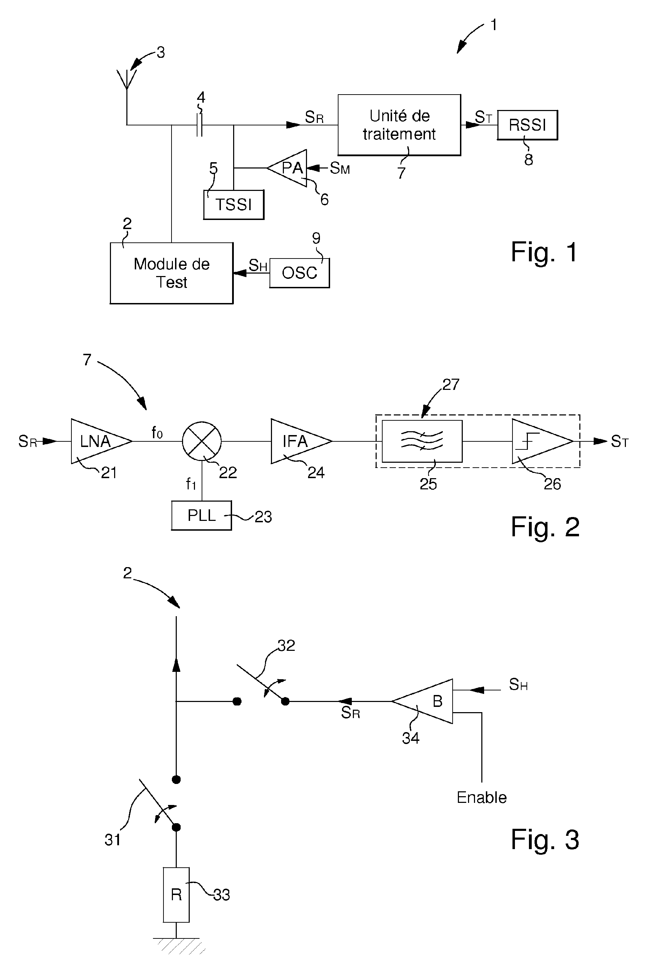

Sur la figure 1, il est représenté un schéma du circuit émetteur-récepteur pour la mise en oeuvre du procédé de test selon la présente invention. Le circuit émetteur-récepteur 1 est alors agencé pour utiliser un protocole de communication fonctionnant à une fréquence de 2.4GHz. Bien entendu, une autre fréquence de communication peut être envisagée.

Le circuit émetteur-récepteur 1 se compose tout d'abord d'une antenne 3. Cette antenne peut être une antenne intégrée déconnectable via un interrupteur ou une antenne extérieure connectée à une sortie du circuit via un connecteur. Cette antenne est connectée à l'entrée d'un condensateur de découplage 4. La sortie du condensateur 4 est connectée à une sortie d'un amplificateur de puissance 6. La sortie de l'amplificateur de puissance 6 est également reliée à un indicateur de puissance du signal transmis 5 (Transmitted Strength Signal Indication ou TSSI en terminologie anglaise). La sortie du condensateur de découplage 4 est également connectée à une unité de traitement 7 du circuit émetteur-récepteur 1.

A la sortie de cette unité de traitement 7, est connecté un indicateur de puissance du signal reçu 8 (Received Strength Signal Indication ou RSSI en terminologie anglaise) qui, comme son nom l'indique, est utilisé pour mesurer la puissance d'un signal reçu. Bien entendu, le circuit émetteur-récepteur 1 n'étant pas en lui-même le principal objet de la présente invention, son fonctionnement ne sera pas expliqué plus en détails.

Cette unité de traitement 7, expliquée ci-après en référence à la figure 2, est utilisée afin de traiter le signal reçu par l'antenne 3 afin de pouvoir lire les informations qu'il contient. Elle comprend un premier étage se présentant sous la forme d'un amplificateur à faible bruit 21 ou préamplificateur. Cet amplificateur 21 a pour but de mettre en forme les faibles signaux en sélectionnant dans la bande de fréquence du signal reçu, une fréquence particulière f₀ et en l'amplifiant. Cette fréquence particulière f₀ est généralement la fréquence du protocole de communication dudit émetteur-récepteur. La sortie de cet amplificateur 21 est connectée à un mélangeur 22 mixant le signal sélectionné f₀ amplifié sortant du préamplificateur 21 avec un signal à fréquence f₁ sortant d'une boucle à verrouillage de phase 23. Ce mélangeur 22 est utilisé pour fournir en sortie un signal converti en fréquence dont la fréquence peut être plus faible que la fréquence f₀. La sortie du mélangeur 22 est connectée en entrée d'un amplificateur de fréquence intermédiaire 24 dont la fonction est d'amplifier le signal de fréquence, la fréquence qui a été décalée. La sortie du mélangeur est connectée à un ensemble comprenant par exemple un filtre passe-bande 25 et un amplificateur limiteur 26 afin respectivement d'éliminer les fréquences parasites autour de la fréquence décalée et de transformer le signal sinusoïdal amplifié en un signal en créneaux ou à impulsions. Cet amplificateur 26 agit alors comme un comparateur possédant un seuil. Bien entendu, les filtres utilisés dans ce circuit émetteur-récepteur 1 seront choisis en fonction des applications et de la bande de fréquences utilisée.

En plus, des éléments propres au circuit émetteur-récepteur 1 montré à la figure 1, le circuit émetteur-récepteur 1 comprend en outre un module de test 2, expliqué ci-après en référence à la figure 3. Ce module de test 2 est relié d'une part à l'entrée du condensateur de découplage 4 et d'autre part, à la sortie de l'oscillateur 9 à quartz fournissant le signal d'horloge S_{H} dudit circuit émetteur-récepteur 1. Ce signal d'horloge S_{H} a par exemple une fréquence de 26 MHz. Ce module de test 2, en référence à la figure 3, comprend un amplificateur tampon en mode haute impédance 34 (tri-state buffer en terminologie anglaise), une résistance 33 et deux moyens de commande 31 et 32 tels que des interrupteurs, des transistors ou tout autre moyen susceptible d'avoir la même fonction. La sortie de l'oscillateur à quartz 9 est connectée à une entrée de l'amplificateur tampon 34. La sortie de l'amplificateur tampon 34 est connectée à l'entrée du condensateur de découplage 4 via un premier interrupteur 32. La résistance 33 est placée entre la masse et un second interrupteur 31, ce dernier étant également relié à l'entrée du condensateur de découplage 4. La valeur de la résistance 33 doit être calculée afin que la résistance 33 ait une impédance similaire à celle de l'antenne. Par exemple, la résistance 33 a une valeur de 50 Ohms.

Lors du test de fonctionnement dudit circuit émetteur-récepteur, en référence aux figures 1 à 3, la première étape consiste à déconnecter l'antenne 3 dudit circuit émetteur-récepteur 1. Cela permet ainsi à ladite antenne 3 de ne pas perturber le test. Cette antenne sera déconnectée pendant toute la durée du test.

Les étapes suivantes consistent à tester les différents modes de fonctionnement dudit circuit émetteur-récepteur 1. En effet, le circuit émetteur-récepteur 1 fonctionne en mode émission ou en mode réception pour respectivement émettre ou recevoir des informations. Ces modes de fonctionnement utilisent alors des parties distinctes du circuit émetteur-récepteur 1.

La deuxième étape consiste à tester que le circuit émetteur-récepteur 1 est bien capable d'émettre des données. Pour cela, il est procédé à une simulation de transmission en émettant un signal S_{M} amplifié en puissance. Pour réaliser cette simulation, le second interrupteur 31 est mis en position fermée, alors que le premier interrupteur 32 est mis en position ouverte. Cela permet à la résistance 33 d'être connectée électriquement au condensateur de découplage 4. Le mode transmission du circuit émetteur-récepteur 1 est alors mis en fonctionnement. La résistance 33 connectée à la place de l'antenne sert alors à simuler l'impédance de l'antenne lorsqu'une émission de données est effectuée. Cela permet de tester que l'amplificateur de puissance 6 fonctionne. En effet, lorsque le circuit émetteur-récepteur 1 émet un signal, ici le signal S_{M} venant de la boucle de modulation, l'impédance de l'antenne 3 varie, consommant donc de la puissance. Ainsi, en remplaçant l'antenne 3 par la résistance 33, on simule la consommation de puissance se produisant lors de la transmission d'un signal. La puissance est alors mesurée par l'indicateur de puissance du signal transmis 5 se trouvant en sortie de l'amplificateur de puissance 6. Si la puissance mesurée est inférieure à un certain seuil prédéfini, -20dBm dans le présent cas, cela signifie que le circuit émetteur-récepteur 1 n'est pas capable d'émettre des informations et inversement, si la puissance atteint ou dépasse ce seuil, alors le mode émission fonctionne.

Une troisième étape consiste à tester le mode réception dudit circuit émetteur-récepteur 1. Pour cela, le second interrupteur 31 est mis en position ouverte et le premier interrupteur 32 est mis en position fermée. Cela entraîne ainsi la connexion entre l'amplificateur tampon 34 et le condensateur de découplage 4. Pour le test du mode réception, un signal est envoyé dans l'unité de traitement 7 pour tester si celle-ci fonctionne. Ce signal, qui est le signal d'horloge S_{H} de fréquence f_{H} est alors amplifié par l'amplificateur tampon 34. Cet amplificateur tampon 34 amplifie tout le signal c'est-à-dire à la fois le signal d'horloge S_{H}, de fréquence 26Mhz dans notre exemple, mais aussi ses harmoniques.

Or, pour un signal de 26 MHz, la première harmonique sera typiquement de fréquence 52 MHz, la seconde à 78 MHz et ainsi de suite, c'est-à-dire des multiples de 26 MHz. On découvre alors une harmonique aux alentours de 2.4 GHz qui est la fréquence f₀ d'émission et de réception. Cette harmonique est utilisée, car sa puissance du signal est si faible qu'elle ne risque pas de causer des perturbations lorsqu'elle est amplifiée pendant le test. Bien entendu, il ne s'agit que d'un exemple non limitatif et par conséquent, d'autres fréquences f₀ pourront être choisies en fonction des caractéristiques du circuit émetteur-récepteur 1. De plus, la fréquence du signal d'horloge S_{H} n'est pas limitée à 26MHz, la seule contrainte est que le signal S_{H} comporte une harmonique située dans la bande de fréquence du circuit émetteur-récepteur, soit 2,4 GHz dans notre cas. Bien entendu, si le circuit émetteur récepteur fonctionne à une autre fréquence, il faut que le signal d'horloge possède une harmonique située dans cette bande de fréquence.

Le signal d'horloge S_{H} amplifié entre alors dans l'unité de traitement 7 comprenant en premier lieu un amplificateur à faible bruit 21 qui va amplifier une fréquence particulière f₀ du signal S_{R}. Cet amplificateur à faible bruit 21 est réglé pour sélectionner puis amplifier l'harmonique dans la bande de fréquence de 2.4 GHz du signal S_{R}. Puis le signal S_{R} subit un changement de fréquence par l'intermédiaire d'un mélangeur 22 qui va mélanger ce signal S_{R} à fréquence f₀ = 2.4 GHz avec un signal modulé à fréquence f₁ venant de la boucle de verrouillage de phase 23. Le résultat est alors un signal de fréquence f' = f₀ - f₁ qui permet une amplification plus simple du fait d'une fréquence plus basse du spectre du signal en sortie du mélangeur. Cette fréquence plus basse permet alors d'amplifier le signal en ayant moins de parasites. Ce signal est alors amplifié, filtré et mis sous forme en créneaux pour obtenir le signal S_{T}. Le signal S_{T} est le signal qui va être démodulé pour que la lecture de l'information puisse être effectuée. La puissance de ce signal S_{T} est alors mesurée par l'indicateur de puissance du signal reçu 8. Cela permet alors de savoir si l'unité de traitement 7 fonctionne comme attendu. En effet, une puissance mesurée qui serait inférieure à un certain seuil prédéfini, -85dbm dans le présent cas, signifierait que le circuit émetteur-récepteur 1 n'émet pas de signaux. Ce test indique alors facilement si la boucle de réception est opérationnelle.

Une quatrième étape consiste alors à mettre le premier et le second interrupteurs 31, 32 en position ouverte afin d'arrêter la procédure de test. Cela permet alors d'isoler le module de test 2 du circuit émetteur-récepteur 1 et d'ainsi éviter que le module de test 2 ne soit une source de perturbations. Bien entendu, on comprendra que le test du mode réception peut avoir lieu avant le test du mode transmission.

Selon une première variante de la présente invention, il peut être prévu une cinquième étape dont le but est de séparer le module de test 2 du circuit émetteur-récepteur 1. En effet, comme dit précédemment, le module de test 2 est réalisé en même temps et sur le même substrat que le circuit émetteur-récepteur 1. Cela permet alors d'effectuer les tests d'un même lot de circuits émetteur-récepteur 1 en même temps. Ainsi, une fois les tests effectués, le module de test 2 n'est plus utile. Il peut donc être séparé du circuit émetteur-récepteur 1. Cette opération de séparation mécanique peut être faite par sciage, par découpe laser ou par tout autre moyen de découpe susceptible d'être utilisé pour cette application. Un avantage est que cette étape permet d'une part que le module de test 2 ne perturbe pas le circuit émetteur-récepteur 1 et d'autre part de gagner de la surface en réduisant ainsi la taille du circuit. Bien entendu, l'indicateur de puissance du signal reçu 8 et l'indicateur de puissance du signal transmis 5 ne sont pas séparés du circuit émetteur-récepteur 1 lors de cette étape et peuvent donc toujours être utilisés à nouveau.

Selon une deuxième variante de la présente invention, il peut être prévu une sixième étape également facultative qui a pour but de tester plus précisément les caractéristiques du circuit émetteur-récepteur 1. En effet, la procédure de test selon la présente invention est utilisée afin de vérifier que les fonctionnalités du circuit 1 fonctionnent bien. Il s'agit de tester si le circuit 1 peut émettre et recevoir un signal par l'antenne 3. Les tests proposés dans cette sixième étape facultative consistent alors à tester précisément les caractéristiques du circuit émetteur-récepteur 1 afin de voir si celles-ci correspondent à ce qui été prévu en théorie.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention défini par les revendications annexées.

## Revendications

1. Procédé de test d'un circuit émetteur-récepteur (1) comprenant une antenne (3) reliée à une unité de traitement (7) agencée pour recevoir des signaux et les convertir en fréquence, ledit circuit émetteur-récepteur comprenant également un amplificateur de puissance (6) relié à ladite antenne et agencé pour envoyé des signaux d'émission, ledit circuit émetteur-récepteur comprenant en outre un module de test (2) , **caractérisé en ce qu'**il comprend les étapes consistant à :
a) connecter électriquement le module de test à l'unité de traitement du circuit émetteur-récepteur;
b) tester le fonctionnement du circuit émetteur-récepteur dans un premier mode de fonctionnement qui peut être soit un mode d'émission de données soit un mode de réception de données, à l'aide du module de test;
c) tester le fonctionnement du circuit émetteur-récepteur dans un second mode de fonctionnement qui peut être soit un mode de réception de données soit un mode d'émission de données, à l'aide du module de test; et
d) déconnecter électriquement le module de test de l'unité de traitement.

2. Procédé selon la revendication 1, **caractérisé en ce qu'**il comprend en outre avant l'étape a), l'étape consistant à déconnecter l'antenne.

3. Procédé selon les revendications 1 ou 2, **caractérisé en ce que** ledit module de test est intégré avec l'unité de traitement.

4. Procédé selon l'une des revendications 1 à 3, **caractérisé en ce que** le test de fonctionnement du circuit émetteur-récepteur en mode émission comprend les étapes suivantes :
- connecter une résistance (33) reliée à la masse à la place de l'antenne ; et
- mesurer la puissance émise à l'aide d'un appareil de mesure de la puissance émise (5).

5. Procédé selon l'une des revendications 1 à 3, **caractérisé en ce que** le test de fonctionnement du circuit émetteur-récepteur en mode réception comprend les étapes suivantes :
- injecter via la borne de connexion de l'antenne, un signal à fréquence de base prédéfinie fₜ ;
- sélectionner et amplifier une harmonique de fréquence f₀ du signal à fréquence prédéfinie pour fournir un signal amplifié à fréquence f₀;
- réaliser un changement de fréquence en passant de la fréquence f₀ du signal amplifiée à un signal intermédiaire à fréquence f₀ - f₁ à l'aide d'un mélangeur et d'un signal de référence à fréquence f₁;
- filtrer ledit signal intermédiaire pour éliminer des parasites ; et
- mesurer la puissance de ce signal intermédiaire à l'aide d'un appareil de mesure (8).

6. Procédé selon la revendication 5, **caractérisé en ce que** la fréquence fₜ prédéfinie est la fréquence d'horloge du circuit émetteur-récepteur.

7. Procédé selon la revendication 5, **caractérisé en ce que** la fréquence harmonique sélectionnée f₀ est de valeur égale à 2.4GHz.

8. Procédé selon l'une des revendications précédentes, **caractérisé en ce qu'**il comprend en outre l'étape e) consistant à séparer mécaniquement le module de test du circuit émetteur-récepteur.

9. Procédé selon l'une des revendications précédentes, **caractérisé en ce qu'**il comprend en outre une étape finale consistant à tester toutes les caractéristiques du circuit émetteur-récepteur à l'aide d'un appareil de test externe.

10. Module de test d'un circuit émetteur-récepteur (1), **caractérisé en ce que** le module de test (2) est prévue pour recevoir à une entrée un signal de fréquence définie, l'entrée du module étant connectée à un moyen d'amplification (34) qui est relié à une sortie du module via un premier moyen de commande (32), ledit module comprenant en outre une résistance (33) connectée à une masse et connectée également à la sortie via un second moyen de commande (31), ladite sortie étant connectée à l'unité de traitement (7) du circuit émetteur-récepteur (1).

11. Module selon la revendication 10, **caractérisé en ce que** le signal de fréquence définie est le signal d'horloge (S_{H}) du circuit émetteur-récepteur.

12. Module selon les revendications 10 ou 11, **caractérisé en ce que** les premiers et seconds moyens de commande sont configurés pour qu'ils ne soient pas dans un état où le courant peut passer, en même temps.
